(19) Europäisches Patentamt
European Patent Office
Office européen des brevets

(11) **EP 1 832 883 B1**

(12) **EUROPÄISCHE PATENTSCHRIFT**

(45) Veröffentlichungstag und Bekanntmachung des Hinweises auf die Patenterteilung:
**11.07.2012 Patentblatt 2012/28**

(21) Anmeldenummer: **07100567.2**

(22) Anmeldetag: **16.01.2007**

(51) Int Cl.:
*B60R 21/0132* ^(2006.01)    *B60R 21/0136* ^(2006.01)
*G01P 15/08* ^(2006.01)    *G01P 15/125* ^(2006.01)
*B60R 21/34* ^(2011.01)

(54) **Kontaktsensorik für ein Fahrzeug**

Contact sensor technology for a vehicle

Technologie de détection de contact pour un véhicule

(84) Benannte Vertragsstaaten:
**DE ES FR GB IT**

(30) Priorität: **06.03.2006 DE 102006010103**

(43) Veröffentlichungstag der Anmeldung:
**12.09.2007 Patentblatt 2007/37**

(73) Patentinhaber: **ROBERT BOSCH GMBH**
**70442 Stuttgart (DE)**

(72) Erfinder:
• **Freienstein, Heiko**
**71263, Weil Der Stadt (DE)**
• **Bunse, Michael**
**71665, Vaihingen/Enz (DE)**

(56) Entgegenhaltungen:
DE-A1- 4 142 698    DE-A1- 10 010 036
DE-A1- 10 012 960    DE-A1- 10 235 370
DE-A1- 19 813 940    DE-A1-102006 012 942
US-A- 5 563 343    US-A1- 2003 024 312
US-A1- 2004 182 157

**Beschreibung**

Stand der Technik

Die Erfindung geht aus von einer Kontaktsensorik für ein Fahrzeug nach der Gattung der unabhängigen Patentansprüche 1 oder 7.

In der Regel weisen Beschleunigungssensoren einer Kontaktsensorik in einem Fahrzeug, welche beispielsweise als kapazitive Sensoren ausgeführt sind, eine lineare Charakteristik auf und sind mit ihrem Messbereich auf eine konkrete Anwendung zugeschnitten. Die linearen Sensoren übertragen die Beschleunigungswerte über den gesamten Messbereich mit der gleichen Genauigkeit bzw. Auflösung, wodurch hohe Datenraten zur Datenübertragung und Datenauswertung erforderlich sind. Lineare Sensoren mit einem niedrigen Beschleunigungsbereich werden beispielsweise für Fußgängerschutzsysteme, zur Überschlagserkennung und für elektronische Stabilitätsprogramme verwendet, während lineare Sensoren mit einem hohen Beschleunigungsbereich für Insassenschutzsysteme, beispielsweise zur Ansteuerung von weiteren Rückhaltemitteln wie Airbags und/oder Gurtstraffer verwendet werden können.

In der Offenlegungsschrift DE 41 42 698 A1 wird eine Vorrichtung zur Beschleunigungsmessung in einem Fahrzeug beschrieben. Die beschriebene Vorrichtung umfasst mindestens einen Sensor und eine Auswerteschaltung für ein Ausgabesignal des Sensors, welche wenigstens einen Verstärker mit veränderbarer Verstärkung umfasst. Die veränderbare Verstärkung wird in Abhängigkeit von der Größe der erfassten Beschleunigung so gewählt, dass im Bereich von kleinen Beschleunigungswerten eine hohe Empfindlichkeit und im Bereich von großen Beschleunigungswerten eine kleine Empfindlichkeit vorliegt.

In der Offenlegungsschrift DE 198 13 940 A1 wird ein mikromechanischer Beschleunigungssensor beschrieben. Der beschriebene Beschleunigungssensor umfasst eine seismische Masse, mindestens ein Federelement zur federnden Lagerung der seismischen Masse und Detektionsmittel zum Erfassen einer Bewegung der seismischen Masse aus einer Ruhestellung in eine Schaltstellung.

In der Offenlegungsschrift DE 102 35 370 A1 wird beispielsweise ein Beschleunigungssensor mit einer nichtlinearen Charakteristik beschrieben. Der beschriebene Beschleunigungssensor ist für verschiedene Wertebereiche optimierbar und weist in einem Bereich mit kleinen Beschleunigungswerten eine hohe Empfindlichkeit und im Bereich großer Beschleunigungswerte eine niedrige Empfindlichkeit auf. Der Beschleunigungssensor ist als mikromechanisches Element mit einer nichtlinearen Charakteristik ausgeführt ist, welches eine schwingfähige Masse, Detektionsmittel zum Erfassen einer Bewegung der schwingfähigen Masse und mindestens zwei Federsysteme mit unterschiedlichen Federkonstanten umfasst, so dass die schwingfähige Masse im Bereich der kleinen Beschleunigungswerte gegen die Kraft eines ersten Federsystems mit einer niedrigen Federkonstante und im Bereich der großen Beschleunigungswerte gegen die Kraft eines zweiten Federsystems mit einer hohen Federkonstante auslenkbar ist.

Des Weiteren offenbaren auch die Dokumente US 2004/0182157 A1 und DE 100 12 960 A1 jeweils einen als mikromechanisches Element ausgeführten Beschleunigungssensor mit einer nicht linearen Charakteristik.

In der Patentschrift US 5,563,343 wird ein mikromechanischer Beschleunigungssensor mit Federelementen beschrieben, wobei die Steifigkeit der Federverhalten elektrisch einstellbar ist, um den Messbereich des Beschleunigungssensors auch nach der Herstellung variabel zu halten.

In der Offenlegungsschrift DE 100 10 036 A1 wird eine Kontaktsensorik für ein Fahrzeug mit einer nichtlinearen Charakteristik beschrieben, welche mindestens einen Beschleunigungssensor und eine Auswerteeinheit aufweist und für verschiedene Wertebereiche optimierbar ist, wobei die Kontaktsensorik in einem Bereich mit kleinen Beschleunigungswerten eine hohe Empfindlichkeit und im Bereich großer Beschleunigungswerte eine niedrige Empfindlichkeit aufweist, wobei die Auswerteeinheit eine digitale Logikschaltung mit einer nichtlinearen Charakteristik umfasst, welche die erfassten analogen Sensordaten digital codiert, um ein codiertes Datenwort zu erzeugen, so dass Beschleunigungswerte mit einer von mindestens einem vorgebaren Schwellwert abhängigen Auflösung ausgebbar sind.

In der Offenlegungsschrift US 2003/0024312 A1 wird ebenfalls eine Kontaktsensorik für ein Fahrzeug mit einer nichtlinearen Charakteristik beschrieben, welche mindestens einen Beschleunigungssensor und eine Auswerteeinheit aufweist und für verschiedene Wertebereiche optimierbar ist, wobei die Kontaktsensorik in einem Bereich mit kleinen Beschleunigungswerten eine hohe Empfindlichkeit und im Bereich großer Beschleunigungswerte eine niedrige Empfindlichkeit aufweist, wobei die Auswerteeinheit eine digitale Logikschaltung mit einer nichtlinearen Charakteristik umfasst, welche die erfassten analogen Sensordaten digital codiert, um ein codiertes Datenwort zu erzeugen, so dass Beschleunigungswerte mit einer von mindestens einem vorgebaren Schwellwert abhängigen Auflösung ausgebbar sind.

Offenbarung der Erfindung

Die erfindungsgemäße Kontaktsensorik für ein Fahrzeug mit den Merkmalen des unabhängigen Patentanspruchs 1 hat demgegenüber den Vorteil, dass mindestens ein Beschleunigungssensor einer Kontaktsensorik als mikromechanisches Element mit einer nichtlinearen Charakteristik ausgeführt ist, welches eine schwingfähige Masse, Detektionsmittel zum Erfassen einer Bewegung der schwingfähigen Masse und mindestens zwei Federsysteme mit unterschiedlichen Federkonstanten umfasst, so dass die schwingfähige Masse im Bereich von kleinen Beschleunigungswerten im Wesentlichen gegen die Kraft eines ersten Federsystems mit einer niedrigen Federkonstante und im Bereich von großen Beschleunigungswerten im Wesentlichen gegen die Kraft eines zweiten Federsystems mit einer hohen Federkonstante auslenkbar ist. Dadurch kann in vorteilhafter Weise der Messbereich der Kontaktsensorik bei gleich bleibender Datenrate vergrößert werden. Dies ermöglicht in vorteilhafter Weise, dass mehrere Funktionen, welche sich vor allem im Messbereich unterscheiden, mit einem Beschleunigungssensor umgesetzt werden können, so dass Sensoren eingespart werden können. So kann die erfindungsgemäße Kontaktsensorik beispielsweise im Fahrzeugfrontbereich angeordnet werden und für eine Erkennung einer Kollision mit einem Fußgänger optimiert werden, d.h. einen ersten Wertebereich von bis zu 50g aufweisen, wodurch im Falle einer Kollision mit einem Fußgänger ein optimaler Schutz für den Fußgänger gewährleistet wird. Zusätzlich kann ein zweiter Wertebereich des erfindungsgemäßen Beschleunigungssensors mit wesentlich höheren Beschleunigungswerten, z.B. bis 1000g, für eine Crashschwerebestimmung und/oder eine Offseterkennung und/oder eine Plausibilitätsprüfung optimiert werden.

Die erfindungsgemäße Kontaktsensorik für ein Fahrzeug hat zudem den Vorteil, dass eine Auswerteschaltung für den mindestens einen Beschleunigungssensor der Kontaktsensorik eine digitale Logikschaltung mit einer nichtlinearen Charakteristik umfasst, welche die erfassten analogen Sensordaten digital codiert, um ein codiertes Datenwort zu erzeugen, so dass die erfassten Beschleunigungswerte mit einer von mindestens einem vorgebaren Schwellwert abhängigen Auflösung ausgebbar sind. Dadurch kann in vorteilhafter Weise bei einem gleich bleibenden Messbereich die Datenrate zur Datenübertragung und Datenauswertung signifikant reduziert werden. So werden beispielsweise kleine Beschleunigungswerte hoch aufgelöst übertragen und hohe Beschleunigungswerte werden mit einer niedrigen Auflösung übertragen.

Ist nur ein Schwellwert vorgegeben, dann erzeugt die digitale Logikschaltung aus den vom Beschleunigungssensor erfassten Beschleunigungswerten durch eine bimodale Codierung ein Datenwort mit N Bit. Hierbei repräsentieren die ersten (N-1) Bit des Datenworts den aktuellen Beschleuniguneswert und das Bit N bestimmt die Auflösung der auszugebenden Beschleunigungswerte, wobei ein erster logischer Wert des N-ten Bit eine hohe Auflösung und ein zweiter logischer Wert des N-ten Bit eine niedrige Auflösung bestimmt. Bei mehr als einem vorgegebenen Schwellwert werden mehr als ein Bit zur Codierung der Auflösung der auszugebenden Beschleunigungswerte verwendet.

Alternativ kann die digitale Logikschaltung die vom Beschleunigungssensor erfassten Beschleunigungswerte mittels einer Tabelle codieren, welche eine beliebige nichtlineare Charakteristik aufweist, wobei die nichtlineare Charakteristik beispielsweise über eine logarithmische Kennlinie oder eine Hyperbel oder eine Parabel erzeugt wird.

Besonders vorteilhaft ist, dass die die Auswerteschaltung, welche die digitale Logikschaltung mit der nichtlinearen Charakteristik zur Codierung der erfassten analogen Sensordaten umfasst, mit dem als mikromechanisches Element mit einer nichtlinearen Charakteristik ausgeführten Beschleunigungssensor kombiniert werden kann, so dass die Auflösung des nichtlinearen Beschleunigungssensors ebenfalls in Abhängigkeit von mindestens einem vorgebbaren Schwellwert variiert werden kann. So kann beispielsweise für den niedrigen Beschleunigungsbereich und für den hohen Beschleunigungsbereich jeweils ein Schwellwert vorgegeben werden.

Durch die in den abhängigen Ansprüchen aufgeführten Maßnahmen und Weiterbildungen sind vorteilhafte Verbesserungen der im unabhängigen Patentanspruch 1 angegebenen Kontaktsensorik für ein Fahrzeug möglich.

In Ausgestaltung der erfindungsgemäßen Kontaktsensorik ist der Bereich der kleinen Beschleunigungswerte beispielsweise als Sensor für ein Fußgängerschutzsystem auswertbar, und der Bereich der großen Beschleunigungswerte kann in vorteilhafter Weise als Up-Front-Sensor für ein Insassenschutzsystem beispielsweise zur Crashschwerebestimmung und/oder zur Offseterkennung und/oder zur Plausibilitätsprüfung ausgewertet werden.

In weiterer Ausgestaltung der erfindungsgemäßen Kontaktsensorik ist die schwingfähige Masse symmetrisch zwischen den beiden Federsystemen angeordnet, wobei jedes Federsystem zwei Federelemente umfasst. Die schwingfähige Masse ist beispielsweise über die Federelemente des ersten Federsystems mit den Federelementen des zweiten Federsystems gekoppelt. Zusätzlich können Mittel vorhanden sein, welche die schwingfähige Masse mit einer elektrostatischen Kraft beaufschlagen, so dass das Federverhalten des ersten und/oder zweiten Federsystems beeinflusst und variiert werden kann. Dadurch kann die Kontaktsensorik in vorteilhafter Weise an verschiedene Anwendungsbereiche angepasst werden.

Die digitale Logikschaltung erzeugt beispielsweise aus den vom Beschleunigungssensor erfassten Beschleunigungswerten durch eine bimodale Codierung ein Datenwort mit N Bit. Hierbei repräsentieren die ersten (N-1) Bit des Datenworts den aktuellen Beschleunigungswert und das Bit N bestimmt die Auflösung. Ein erster logischer Wert des N-ten Bit zeigt beispielsweise eine aktuelle Beschleunigung an, welche kleiner als ein vorgegebener Schwellwert ist und bestimmt eine hohe Auflösung. Ein zweiter logischer Wert des N-ten Bit zeigt einen aktuellen Beschleunigungswert an, welche größer als der vorgebbare Schwellwert ist, und bestimmt eine niedrige Auflösung.

In weiterer Ausgestaltung der erfindungsgemäßen Kontaktsensorik umfasst die digitale Logikschaltung einen Analog-Digitalwandler, welcher die analogen Sensordaten in das digitale Datenwort umwandelt, wobei die nichtlineare Charakteristik der Logikschaltung vorzugsweise in den Analog-Digitalwandler implementiert ist.

Ausführungsbeispiele der Erfindung sind in den Zeichnungen dargestellt und werden in der nachfolgenden Beschreibung näher erläutert.

Kurze Beschreibung der Zeichnungen

Figur 1 zeigt ein Blockdiagramm eines ersten Ausführungsbeispiels einer erfindungsgemäßen Kontaktsensorik für ein Fahrzeug.

Figur 2 zeigt ein Blockdiagramm eines zweiten Ausführungsbeispiels einer erfindungsgemäßen Kontaktsensorik für ein Fahrzeug.

Ausführungsformen der Erfindung

Um im Falle von Frontcrashs eine frühzeitige Information über die Crashschwere zu erhalten und einen Offset, z.B. 40% Überdeckung, erkennen zu können, werden normalerweise zwei so genannte Up-Front-Sensoren im Frontbereich des Fahrzeugs verbaut. In der Regel sind dies Beschleunigungssensoren, die einen sehr hohen Messbereich von beispielsweise 1000g oder mehr aufweisen müssen, damit eine sichere differenzierte Signalauswertung möglich ist. Die Up-Front-Sensoren können zusätzlich zur Plausibilisierung von Frontcrashs eingesetzt werden.

Zukünftig werden zur Erkennung einer Kollision mit einem Fußgänger zusätzliche Beschleunigungssensoren im Frontbereich des Fahrzeugs angebracht, die allerdings bezüglich Auflösung und Messbereich eine vollkommen andere Anforderungen als die Up-Front-Sensoren haben. Die Fußgängerschutzsensoren haben beispielsweise einen Messbereich von 50g oder weniger.

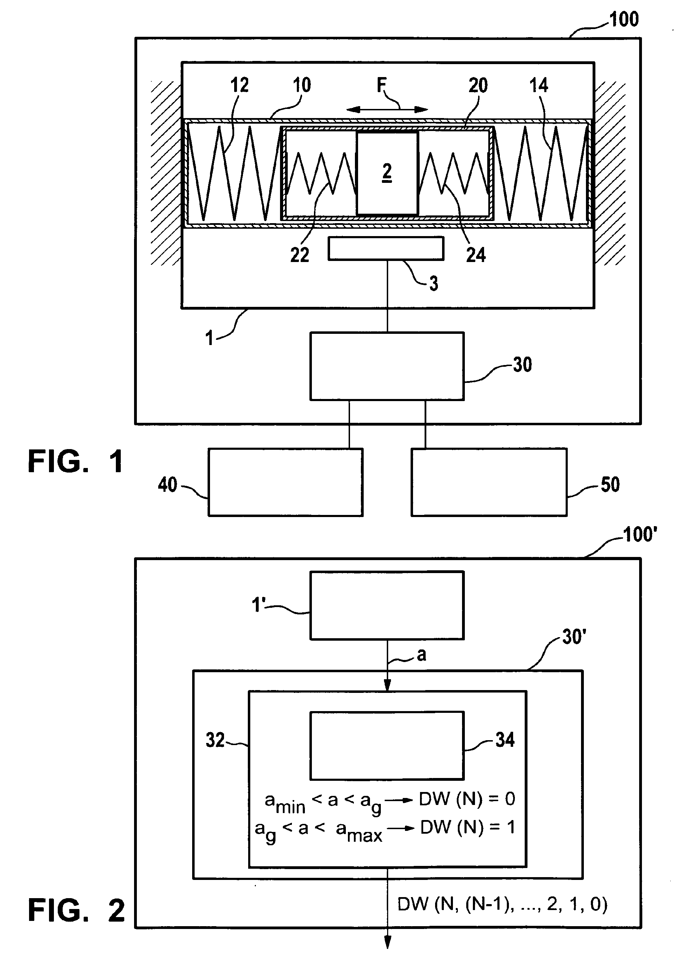

Wie aus Figur 1 ersichtlich ist, umfasst ein erstes Ausführungsbeispiel einer erfindungsgemäßen Kontaktsensorik 100 für ein Fahrzeug einen Beschleunigungssensor 1 und eine Auswerteeinheit 30. Der Beschleunigungssensor 1 ist als mikromechanisches Element mit einer nichtlinearen Charakteristik ausgeführt, welche eine schwingfähige Masse 2, Detektionsmittel 3 zum Erfassen einer Bewegung der schwingfähigen Masse und zwei Federsysteme 10, 20 mit unterschiedlichen Federkonstanten umfasst. Die Federkonstanten der Federsysteme 10, 20 werden so gewählt, dass die schwingfähige Masse 2 im Bereich kleiner Beschleunigungswerte im Wesentlichen gegen die Kraft F eines ersten Federsystems 20 mit einer niedrigen Federkonstante und im Bereich großer Beschleunigungswerte gegen die Kraft F eines zweiten Federsystems 10 mit einer hohen Federkonstante auslenkbar ist. Die beiden Federsysteme können jeweils auf einen zugehörigen Wertebereich optimiert werden. So kann das Federverhalten des ersten und/oder zweiten Federsystems 10, 20 beispielsweise durch Beaufschlagen der schwingfähigen Masse 2 mit einer elektrostatischen Kraft beeinflusst werden. Durch die niedrige Federkonstante des ersten Federsystems 20 weist der Beschleunigungssensor 1 im Bereich der kleinen Beschleunigungswerte eine hohe Empfindlichkeit auf. Durch die hohe Federkonstante des zweiten Federsystems 10 weist der Beschleunigungssensor 1 im Bereich der großen Beschleunigungswerte eine niedrige Empfindlichkeit auf. Der Bereich der kleinen Beschleunigungswerte kann von der Auswerteeinheit 30 beispielsweise als Sensor für ein Fußgängerschutzsystem 40 ausgewertet werden und der Bereich der großen Beschleunigungswerte kann von der Auswerteeinheit 30 beispielsweise als Up-Front-Sensor für ein Insassenschutzsystem 50 ausgewertet werden. Wie weiter aus Figur 1 ersichtlich ist, ist die schwingfähige Masse 2 symmetrisch zwischen den beiden Federsystemen 10, 20 angeordnet, wobei jedes Federsystem 10, 20 jeweils zwei Federelemente 12, 14, 22, 24 und die schwingfähige Masse 2 über die Federelemente 22, 24 des ersten Federsystems 20 mit den Federelementen 12, 14 des zweiten Federsystems 10 gekoppelt ist.

Wie aus Figur 2 ersichtlich ist, umfasst ein zweites Ausführungsbeispiel einer erfindungsgemäßen Kontaktsensorik 100' für ein Fahrzeug einen Beschleunigungssensor 1' mit einer linearen Charakteristik und eine Auswerteeinheit 30', welche eine digitale Logikschaltung 32 mit einer nichtlinearen Charakteristik umfasst. Die Logikschaltung 32 codiert die erfassten analogen Sensordaten a und erzeugt ein codiertes digitales Datenwort DW. Das codierte Datenwort DW ist so aufgebaut, dass Beschleunigungswerte a mit einer variablen Auflösung ausgegeben werden, wobei die Auflösung von mindestens einem vorgebbaren Schwellwert $a_g$ abhängig ist. Wird die Auflösung beispielsweise in Abhängigkeit von einem vorgegebenen Schwellwert $a_g$ variiert, dann werden die Beschleunigungswerte a, welche kleiner als der vorgegebene Schwellwert $a_g$ sind, mit einer hohen Auflösung ausgegeben und die Beschleunigungswerte a, welche größer als der vorgebbare Schwellwert $a_g$ sind, werden mit einer niedrigen Auflösung ausgegeben. Sind beispielsweise zwei Schwellwerte vorgegeben, dann können Beschleunigungswerte, welche kleiner als ein erster Schwellwert sind, mit einer ersten Auflösung ausgegeben werden, Beschleunigungswerte, welche größer als der erste Schwellwert und kleiner als ein zweiter Schwellwert sind, können mit einer zweiten Auflösung und Schwellwerte, welche größer als der zweite Schwellwert sind, können mit einer dritten Auflösung ausgegeben werden.

Ist nur ein Schwellwert $a_g$ vorgegeben, dann erzeugt die digitale Logikschaltung 32 aus den vom Beschleunigungssensor 1' erfassten Beschleunigungswerten a durch eine bimodale Codierung ein Datenwort DW mit N Bit. Hierbei repräsentieren die ersten (N-1) Bit des Datenworts DW den aktuellen Beschleunigungswert a und das Bit N bestimmt die Auflösung der auszugebenden Beschleunigungswerte a, wobei ein erster logischer Wert 0 des N-ten Bit eine hohe Auflösung und ein zweiter logischer Wert 1 des N-ten Bit eine niedrige Auflösung bestimmt. Somit gilt:

$$a_{min} < a < a_g \rightarrow DW\,(N) = 0$$

$$a_g < a < a_{max} \rightarrow DW\,(N) = 1$$

Hierbei repräsentiert $a_{min}$ einen minimalen vom Beschleunigungssensor 1' detektierbaren Beschleunigungswert und $a_{max}$ einen maximal vom Beschleunigungssensor 1' detektierbaren Beschleunigungswert. Bei mehr als einem vorgegebenen Schwellwert werden mehr als ein Bit zur Codierung der Auflösung der auszugebenden Beschleunigungswerte a verwenden. Im dargestellten zweiten Ausführungsbeispiel umfasst die digitale Logikschaltung 32 einen Analog-Digitalwandler 34, welcher die analogen Sensordaten a in das digitale Datenwort DW umwandelt, wobei die nichtlineare Charakteristik der Logikschaltung 32 vorzugsweise in den Analog-Digitalwandler 34 implementiert ist.

Bei einer alternativen nicht dargestellten Ausführungsform codiert die digitale Logikschaltung 32 die vom Beschleunigungssensor 1' erfassten Beschleunigungswerte a mittels einer Tabelle, welche eine beliebige nichtlineare Charakteristik aufweist.

Erfindungsgemäß umfasst die Auswerteschaltung 30 des ersten Ausführungsbeispiels 1 gemäß Figur 1 ebenfalls eine digitale Logikschaltung 32 mit einer nichtlinearen Charakteristik, welche die erfassten analogen Sensordaten a digital codiert, um ein codiertes Datenwort DW zu erzeugen, wobei das codierte Datenwort DW analog zum zweiten Ausführungsbeispiel gemäß Figur 2 die Beschleunigungswerte a mit einer variablen Auflösung ausgeben kann, welche von mindestens einem vorgebbaren Schwellwert $a_g$ abhängig ist. So kann beispielsweise für jeden Beschleunigungsbereich des Beschleunigungssensors 1 ein Schwellwert vorgegeben werden oder es kann ein Schwellwert vorgegeben werden, welcher einem Grenzwert zwischen den beiden Beschleunigungsbereichen des Beschleunigungssensors entspricht.

## Patentansprüche

1. Kontaktsensorik für ein Fahrzeug mit einer nichtlinearen Charakteristik, welche mindestens einen Beschleunigungssensor (1, 1') aufweist und für verschiedene Wertebereiche optimierbar ist,

wobei die Kontaktsensorik (100) in einem Bereich mit kleinen Beschleunigungswerten eine hohe Empfindlichkeit und im Bereich großer Beschleunigungswerte eine niedrige Empfindlichkeit aufweist, wobei der mindestens eine Beschleunigungssensor (1, 1') als mikromechanisches Element mit einer nichtlinearen Charakteristik ausgeführt ist, welches eine schwingfähige Masse (2), Detektionsmittel (3) zum Erfassen einer Bewegung der schwingfähigen Masse (2) und mindestens zwei Federsysteme (10, 20) mit unterschiedlichen Federkonstanten umfasst, so dass die schwingfähige Masse (2) im Bereich der kleinen Beschleunigungswerte gegen die Kraft eines ersten Federsystems (20) mit einer niedrigen Federkonstante und im Bereich der großen Beschleunigungswerte gegen die Kraft eines zweiten Federsystems (10) mit einer hohen Federkonstante auslenkbar ist,
**gekennzeichnet durch**
eine Auswerteeinheit (30, 30'), welche eine digitale Logikschaltung (32) mit einer nichtlinearen Charakteristik umfasst, welche dazu ausgebildet ist,

• die erfassten analogen Sensordaten (a) digital zu codieren, um ein codiertes Datenwort (DW) zu erzeugen, so dass Beschleunigungswerte (a) mit einer von mindestens einem vorgebbaren Schwellwert (ag) abhängigen Auflösung ausgebbar sind, wobei die digitale Logikschaltung (32) dazu ausgebildet ist, das Datenwort (DW) **durch** eine bimodale Codierung zu erzeugen, wobei mindestens ein Bit (N) die Auflösung der auszugebenden Beschleunigungswerte (a) bestimmt, während die restlichen Bit (N-1) den aktuellen Beschleunigungswert (a) repräsentieren, oder
• die erfassten Beschleunigungswerte (a) mittels einer Tabelle zu codieren, welche eine beliebige nichtlineare Charakteristik aufweist.

2. Kontaktsensorik nach Anspruch 1, **dadurch gekennzeichnet, dass** der Bereich der kleinen Beschleunigungswerte als Sensor für ein Fußgängerschutzsystem (40) auswertbar ist und der Bereich großer Beschleunigungswerte als Up-Front-Sensor für ein Insassenschutzsystem (50) auswertbar ist.

3. Kontaktsensorik nach Anspruch 1 oder 2, **dadurch gekennzeichnet, dass** die schwingfähige Masse (2) symmetrisch zwischen den beiden Federsystemen (10, 20) angeordnet ist, wobei jedes Federsystem (10, 20) zwei Federelemente (12, 14, 22, 24) umfasst.

4. Kontaktsensorik nach einem der Ansprüche 1 bis 3, **dadurch gekennzeichnet, dass** die schwingfähige Masse (2) über die Federelemente (22, 24) des ersten Federsystems (20) mit den Federelementen

(12, 14) des zweiten Federsystems (10) gekoppelt ist.

5. Kontaktsensorik nach einem der Ansprüche 1 bis 4, **gekennzeichnet durch** Mittel zum Beaufschlagen der schwingfähigen Masse (2) mit einer elektrostatischen Kraft zur Beeinflussung des Federverhaltens des ersten und/oder zweiten Federsystems (10, 20).

6. Kontaktsensorik nach einem der Ansprüche 1 bis 5, **dadurch gekennzeichnet, dass** im Fall einer bimodalen Codierung der erfassten Beschleunigungswerte ein erster logischer Wert (0) des N-ten Bit eine aktuelle Beschleunigung anzeigt, welche kleiner als ein vorgegebener Schwellwert ist und eine hohe Auflösung bestimmt, und ein zweiter logischer Wert (1) des N-ten Bit einen aktuellen Beschleunigungswert (a) anzeigt, welche größer als der vorgebbare Schwellwert ($a_g$) ist, und eine niedrige Auflösung bestimmt.

7. Kontaktsensorik nach einem der Ansprüche 1 bis 6 **dadurch gekennzeichnet, dass** die digitale Logikschaltung (32) einen Analog-Digitalwandler (34) umfasst, welcher die analogen Sensordaten (a) in das digitale Datenwort (DW) umwandelt, wobei die nichtlineare Charakteristik der Logikschaltung (32) vorzugsweise in den Analog-Digitalwandler (34) implementiert ist.

**Claims**

1. Contact sensor system for a vehicle having a nonlinear characteristic, which has at least one acceleration sensor (1, 1') and can be optimized for different value ranges,
   wherein the contact sensor system (100) has a high level of sensitivity in a range with small acceleration values and a low level of sensitivity in the range of large acceleration values,
   wherein the at least one acceleration sensor (1, 1') is in the form of a micromechanical element having a nonlinear characteristic, which comprises an oscillatory mass (2), detection means (3) for sensing a movement by the oscillatory mass (2), and at least two spring systems (10, 20) having different spring constants, as a result of which the oscillatory mass (2) can be deflected against the force of a first spring system (20) with a low spring constant in the range of the small acceleration values and can be deflected against the force of a second spring system (10) with a high spring constant in the range of the large acceleration values,
   **characterized by**
   an evaluation unit (30, 30') which comprises a digital logic circuit (32) having a nonlinear characteristic, which is designed

   • to digitally code the captured analogue sensor data (a) in order to produce a coded data word (DW), as a result of which acceleration values (a) can be output at a resolution which is dependent on at least one prescribable threshold value (ag), wherein the digital logic circuit (32) is designed to produce the data word (DW) by means of bimodal coding, wherein at least one bit (N) determines the resolution of the acceleration values (a) which are to be output, while the remaining bits (N-1) represent the current acceleration value (a), or
   • to decode the captured acceleration values (a) using a table which has an arbitrary nonlinear characteristic.

2. Contact sensor system according to Claim 1, **characterized in that** the range of the small acceleration values can be evaluated as a sensor for a pedestrian protection system (40), and the range of large acceleration values can be evaluated as an up-front sensor for an occupant protection system (50).

3. Contact sensor system according to Claim 1 or 2, **characterized in that** the oscillatory mass (2) is arranged symmetrically between the two spring systems (10, 20), wherein each spring system (10, 20) comprises two spring elements (12, 14, 22, 24).

4. Contact sensor system according to one of Claims 1 to 3, **characterized in that** the oscillatory mass (2) is coupled to the spring elements (12, 14) of the second spring system (10) via the spring elements (22, 24) of the first spring system (20).

5. Contact sensor system according to one of Claims 1 to 4, **characterized by** means for subjecting the oscillatory mass (2) to an electrostatic force for the purpose of influencing the spring behaviour of the first and/or second spring system (10, 20).

6. Contact sensor system according to one of Claims 1 to 5, **characterized in that**, in the case of bimodal coding of the captured acceleration values, a first logic value (0) of the Nth bit indicates a current acceleration which is lower than a prescribed threshold value and determines a high resolution, and a second logic value (1) of the Nth bit indicates a current acceleration value (a) which is higher than the prescribable threshold value ($a_g$), and determines a low resolution.

7. Contact sensor system according to one of Claims 1 to 6, **characterized in that** the digital logic circuit (32) comprises an analogue/digital converter (34) which converts the analogue sensor data (a) into the digital data word (DW), wherein the nonlinear characteristic of the logic circuit (32) is preferably implemented in the analogue/digital converter (34).

**Revendications**

1. Dispositif de détection à contact pour un véhicule ayant une caractéristique non linéaire, lequel présente au moins un capteur d'accélération (1, 1') et peut être optimisé pour différentes plages de valeurs, le dispositif de détection à contact (100) présentant une sensibilité élevée dans une plage à petites valeurs d'accélération et une faible sensibilité dans une plage où les valeurs d'accélération sont élevées,
l'au moins un capteur d'accélération (1, 1') étant réalisé sous la forme d'un élément micromécanique ayant une caractéristique non linéaire, lequel comprend une masse oscillante (2), des moyens de détection (3) pour détecter un mouvement de la masse oscillante (2) et au moins deux systèmes à ressort (10, 20) ayant des constantes de ressort différentes, de sorte que la masse oscillante (2) puisse être déviée en s'opposant à la force d'un premier système à ressort (20) ayant une faible constante de ressort dans la plage à petites valeurs d'accélération et en s'opposant à la force d'un deuxième système à ressort (10) ayant une constante de ressort élevée dans la plage où les valeurs d'accélération sont élevées, **caractérisé par**
une unité d'interprétation (30, 30') qui comprend un circuit logique numérique (32) ayant une caractéristique non linéaire, laquelle est configurée pour

    * réaliser un codage numérique des données de capteur analogiques (a) acquises afin de produire un mot de données codé (DW), de sorte que les valeurs d'accélération (a) puissent être délivrées avec une résolution qui dépend d'au moins une valeur de seuil (ag) pouvant être prédéfinie, le circuit logique numérique (32) étant configuré pour générer le mot de données (DW) par un codage bimodal, au moins un bit (N) définissant la résolution des valeurs d'accélération (a) à délivrer, alors que les bits restants (N-1) représentant la valeur d'accélération (a) courante, ou
    * coder les valeurs d'accélération (a) acquises au moyen d'un tableau qui présente une caractéristique non linéaire quelconque.

2. Dispositif de détection à contact selon la revendication 1, **caractérisé en ce que** la plage à petites valeurs d'accélération peut être interprétée comme un capteur pour un système de protection des piétons (40) et la plage où les valeurs d'accélération sont élevées peut être interprétée comme un capteur de zone avant pour un système de protection des occupants (50).

3. Dispositif de détection à contact selon la revendication 1 ou 2, **caractérisé en ce que** la masse oscillante (2) est disposée de manière symétrique entre les deux systèmes à ressort (10, 20), chaque système à ressort (10, 20) comprenant deux éléments ressorts (12, 14, 22, 24).

4. Dispositif de détection à contact selon l'une des revendications 1 à 3, **caractérisé en ce que** la masse oscillante (2) est accouplée avec les éléments ressorts (12, 14) du deuxième système à ressort (10) par le biais des éléments ressorts (22, 24) du premier système à ressort (20).

5. Dispositif de détection à contact selon l'une des revendications 1 à 4, **caractérisé par** des moyens pour appliquer à la masse oscillante (2) une force électrostatique destinée à influencer le comportement résilient du premier et/ou du deuxième systèmes à ressort (10, 20).

6. Dispositif de détection à contact selon l'une des revendications 1 à 5, **caractérisé en ce que** dans le cas d'un codage bimodal des valeurs d'accélération détectées, une première valeur logique (0) indique le Nième bit d'une accélération actuelle, laquelle est inférieure à une valeur de seuil prédéfinie et définit une résolution élevée, et une deuxième valeur logique (1) indique le Nième bit d'une valeur d'accélération (a) actuelle, laquelle est supérieure à la valeur de seuil ($a_g$) pouvant être prédéfinie et définit une faible résolution.

7. Dispositif de détection à contact selon l'une des revendications 1 à 6, **caractérisé en ce que** le circuit logique numérique (32) comprend un convertisseur analogique/numérique (34) qui convertit les données de capteur analogiques (a) en le mot de données numérique (DW), la caractéristique non linéaire du circuit logique (32) étant de préférence mise en oeuvre dans le convertisseur analogique/numérique (34).

FIG. 1

$$a_{min} < a < a_g \longrightarrow DW(N) = 0$$
$$a_g < a < a_{max} \longrightarrow DW(N) = 1$$

DW (N, (N-1), ..., 2, 1, 0)

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4142698 A1
- DE 19813940 A1
- DE 10235370 A1
- US 20040182157 A1
- DE 10012960 A1
- US 5563343 A
- DE 10010036 A1
- US 20030024312 A1